(19) Europäisches Patentamt
European Patent Office
Office européen des brevets

(11) **EP 2 481 111 B1**

(12) **EUROPEAN PATENT SPECIFICATION**

(45) Date of publication and mention
of the grant of the patent:
**07.05.2014  Bulletin 2014/19**

(51) Int Cl.:
*H01M 4/04* ^(2006.01)    *H01M 4/38* ^(2006.01)
*H01M 4/134* ^(2010.01)   *H01M 4/1395* ^(2010.01)
*H01M 4/36* ^(2006.01)    *H01M 4/62* ^(2006.01)

(21) Application number: **10757572.2**

(22) Date of filing: **20.09.2010**

(86) International application number:
**PCT/EP2010/005748**

(87) International publication number:
**WO 2011/035876 (31.03.2011 Gazette 2011/13)**

(54) **NEW SILICON BASED ELECTRODE FORMULATIONS FOR LITHIUM-ION BATTERIES AND METHOD FOR OBTAINING IT**

NEUE ELEKTRODENFORMULIERUNGEN AUF SILIZIUMBASIS FÜR LITHIUM-IONEN-BATTERIEN UND VERFAHREN ZUR GEWINNUNG

NOUVELLES FORMULATIONS POUR ÉLECTRODES À BASE DE SILICIUM DESTINÉES À ÊTRE UTILISÉES DANS DES BATTERIES LITHIUM-ION ET PROCÉDÉ D'OBTENTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority:  **23.09.2009   US 277299 P**

(43) Date of publication of application:
**01.08.2012   Bulletin 2012/31**

(73) Proprietor: **UMICORE**
**1000 Brussels (BE)**

(72) Inventors:
• **ATI, Mohamed**
  **F-80080 Amiens (FR)**
• **SCOYER, Jean**
  **B-2200 Herentals (BE)**
• **PUT, Stijn**
  **B-2491 Olmen (BE)**
• **DRIESEN, Kris**
  **B-3500 Hasselt (BE)**

(74) Representative: **Knockaert, Guy**
**Umicore**
**RDI Patent Department**
**Watertorenstraat 33**
**2250 Olen (BE)**

(56) References cited:
**WO-A1-2010/086558     US-A1- 2006 237 697**

• **MAZOUZI D ET AL: "Silicon composite electrode with high capacity and long cycle life", ELECTROCHEMICAL AND SOLID-STATE LETTERS, IEEE SERVICE CENTER, PISCATAWAY, NJ, US, vol. 12, no. 11, 28 August 2009 (2009-08-28), pages A215-A218, XP002577337, ISSN: 1099-0062, DOI: DOI: 10.1149/1.3212894**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention pertains to new electrode formulations for lithium-ion batteries. Today, lithium-ion batteries are widely used in portable electronic devices. Compared to other rechargeable cells, such as nickel-cadmium and nickel metal hydride, Li-ion cells have higher energy density, higher operating voltages, lower self discharge, and low maintenance requirements. These properties have made Li-ion cells the highest performing available secondary battery.

The worldwide energy demand increase has driven the lithium-ion battery community to search for new generation electrode materials with high energy density. One of the approaches is to replace the conventional carbon graphite negative electrode material by metal or metallic alloy based on for example silicon (Si), tin (Sn) and/or aluminum (Al). These materials can provide much higher specific and volumetric capacities than graphite.

Electrodes for Li-ion batteries are commonly prepared with standard formulations and routine processing conditions. More and more studies report the impact of formulations, morphology, and processing routines on the electrochemical performance of composite electrode. However, formulations and processing of the composite electrodes are strongly influenced by the experimental and technical parameters such as the physical and chemical properties of materials, mixing sequences of material sources, time, temperature, electrodes thickness,... These parameters should be optimized to enhance the composite electrode stability and its electrochemical performances.

Different polymers have been studied as binders' additives for negative/positive composite electrodes and as electrolytes host for lithium-ion batteries. One of the most studied polymers is Poly-(ethylene oxide). However, this polymer has some limitations such as its relatively high operating temperature (~ 80°C) and its electrochemical instability above 4 V vs Li$^+$/Li.

Consequently, polymers with high electrochemical stability such as PTFE, PVdF, and PVdF-HFP copolymer have been widely adopted as a binder for composite electrodes in lithium-ion batteries. Remarkable improvement resulted from the use of the PVdF-HFP copolymer in PLIon™ technology. This copolymer has a good distribution of amorphous and crystalline domains which allows a high uptake of liquid electrolyte and provides good mechanical cohesion. However, due to poor chemical properties (bonding effects), environmental issues, and safety aspects with new negative electrode materials these binders are substituted by new binder types such as silica, gelatin, poly-(acrylonitrile-methyl methacrylate) (PAMMA), poly-(methyl methacrylate) (PMMA), polypyrrole, aromatic polyamides, carboxymethyl cellulose (CMC), and styrene butadiene rubber (SBR). Since safety, cost and environmental issues arise daily, a switch away from organic process using organic solvents became an obligation. Recently, many attempts have been made to switch from non-aqueous to aqueous processes.

Si-based negative electrode materials could significantly enhance the energy density of the commercial lithium ion batteries. Silicon has the largest theoretical gravimetric capacity (3579 mAh/g) corresponding to the following reaction: $15Li + 4Si \rightarrow Li_{15}Si_4$ and a large volumetric capacity (2200 mAh/cm$^3$). Unfortunately, it exhibits poor capacity retention. This poor cycle life is also due to the huge volume expansion (+ 310%) over cycling, as the particles break up and become non-contacted. Several studies have been made to reduce the capacity fading of Si-based electrodes. Nevertheless, the binder has been found to play a key role in stabilizing capacity retention of Si based electrodes. Chen et al. (in: Z. Chen, L. Christensen, and J.R. Dahn; Journal of Electrochemical Society; (150) 1073, 2003) suggested that cycling stability of Si-based electrodes might benefit from the use of elastic binder materials. An elastomeric binder has generally a higher elasticity modulus than PVDF. This allows the composite electrode to expand and shrink more easily and reduces the forces exerted between particles. Li et al. (in: J. Li, R.B. Lewis, and J.R. Dahn; Electrochemical Solid State Letters; (10); 17 (2007)) showed that Si-based electrodes using Na-CMC as binder experienced good cycling performance although Na-CMC is not elastomeric and has a low elongation to break.

In Mazouzi et al. (in Electrochemical and solid-state letters, IEEE Service Center, Piscataway, NJ, US, vol.12, no. 11) a nanosilicon-based composite electrode is described prepared using aqueous processing in an acidic medium. Covalent bonding between Si particles and a CMC binder is promoted.

In US2006/237697 an electrode material for a rechargeable lithium battery is disclosed, characterized in that said electrode material comprises a fine powder of a silicon-based material whose principal component is silicon element, said fine powder having an average particle size (R) in a range of 0.1 μm≤R<0.5 μmm. The Si powder is provided with an oxidation preventive thin oxide surface coat film.

It is an aim of the present invention to further improve the performance of the electrode compositions used in lithium-ion batteries.

Viewed from a first aspect, the present invention can provide an electrode assembly comprising a current collector provided with an electrode composition comprising carboxymethyl cellulose (CMC) binder material and nano silicon powder provided with a layer silicon suboxides $SiO_x$, $1 \leq x < 2$, such that the oxygen content of said silicon is between 3 and 10 % by weight. In one embodiment the electrode composition can have a capacity of more than 2600 mAh/g silicon, when cycled between 0.01 and 1.0V. In another embodiment this capacity can be achieved at the 5th charge.

In one embodiment the electrode composition can have a capacity of more than 3300 mAh/g silicon, when cycled between 0.01 and 1.0V. In another embodiment this capacity is achieved at the 5th charge. In still a further embodiment, the invention can provide an electrode composition having a capacity of more than 520 mAh/g. In one embodiment the electrode composition has a capacity of more than 660 mAh/g.

In another embodiment the silicon powder can have an average particle size of at least 0,01 $\mu$m. Here, the average particle size ($d_{av}$) is defined as the average spherical particle size calculated from the specific surface area, assuming spherical particles of equal size, according to the following formula:

$$d_{av} = \frac{6}{\rho \times BET},$$

in which p refers to the theoretical density of the powder and BET refers to the specific surface area (m$^2$/g) as determined by the N$_2$ adsorption method of Brunauer-Emmett-Teller. Particles larger than 1$\mu$m are not preferred since Li-ion diffusion will be too slow and the volume expansion of these particles will be too large. For particles smaller than 10nm, specific surface area and thus reactivity with the electrolyte will be too high causing fast electrolyte degradation.

In one embodiment the electrode further comprises styrene butadiene rubber as binder material. In another embodiment the electrode composition consists of 20-80 wt% silicon or silicon alloy, 5-40 wt% binder material, the remainder being a compound consisting of carbon. This allows to maintain electrical contacts between the electrode particles during charge/discharge, and to avoid excessive swelling. In yet a further embodiment the electrode composition consists of 20-60 wt% silicon or silicon alloy, 20. 40 wt% binder material, and at least 3 wt% of a compound consisting of carbon. In one embodiment the carbon compound consists of acetylene black powder. In another embodiment the electrode consists of 50 wt% silicon, 25 wt% binder material, and 25 wt% acetylene black powder. To avoid continuous deep cycling of the silicon to its full theoretical capacity the voltage of the negative electrode versus lithium can be limited to e.g. 70mV. To compensate this the silicon content in the electrode can be increased and/or the oxygen content for silicon can be lowered.

Viewed from a second aspect, the invention can also provide a process for preparing the electrode assembly described before, comprising the steps of

- dissolving a CMC salt in water so as to obtain an aqueous solution of binder material, and either:
- adding the nano silicon powder first to the CMC solution and thereafter the carbon compound,
- or adding the carbon compound first to the CMC solution and thereafter the silicon powder. In both cases a slurry is obtained. The steps thereafter are:
- spreading said slurry on a current collector, such as a copper foil, and
- curing said electrode assembly comprising said slurry at a temperature between 125 and 175°C.

In both alternative preparation methods the silicon and/or carbon are better dispersed than when mixed together in one step. In one embodiment in both alternative preparation methods aqueous solution of binder material can be aged under stirring for at least 5 hours, before dispersing the nano silicon powder or the carbon compound. Aging the solution is an example step to complete the dissolution of the CMC salt.

In one embodiment the binder is Na-CMC and the aqueous solution of binder material has a concentration of 2-10 wt% of Na-CMC. In another embodiment the concentration is 2-4 wt%.

In some applications a higher or controlled oxygen content is interesting to shield or protect the silicon particles from side reactions with components in the battery like the electrolyte. Possible ways to increase oxygen contents of silicon nanoparticles include chemical ageing, oxidation in aqueous media,... One example way to vary the oxygen content of the silicon particle in a controlled way is by adapting the pH value of the solution of the CMC salt, and in one embodiment after the aging of the solution. This can be done by adding acids, such as formic acid, which can be removed at higher temperatures, when the electrode assembly is cured. In order to obtain oxygen contents between 3 and 18 wt% the pH of the suspension can be controlled between pH3 and pH8.

Another example process for preparing the electrode assembly comprises the steps of:

- dissolving a CMC salt in water so as to obtain an aqueous solution of binder material,
- dispersing said nano silicon powder in an aqueous solution having a pH between 3 and 8, so as to obtain a silicon suspension,
- mixing said aqueous binder solution and said silicon suspension so as to obtain an aqueous CMC-silicon suspension,
- dispersing said carbon compound in said CMC-silicon suspension, thereby obtaining a slurry,
- spreading said slurry on a current collector, such as a copper foil, and,
- curing said electrode assembly comprising said slurry at a temperature between 125 and 175°C.

The invention is further illustrated by the following examples. Table 1 summarizes the silicon based powders used in the different examples.

Example 1

An Na-CMC solution is prepared with a content of 2wt% Na-CMC, and is aged under stirring for 12 hr. Also a water based suspension is prepared at pH8 and nano silicon powder, with a specific surface area of $20m^2/g$ and an oxygen content of 3wt%, is added. This suspension is ball milled during 15 minutes using a Fritch Pulverisette 6 (Fritsch Germany). In this way the oxygen level is measured and equals 3wt%.

Subsequently, a paste or slurry is prepared by first adding the silicon suspension to the Na-CMC solution, whereafter acetylene black is added to the obtained mixture. The final paste, having a silicon/CMC/acetylene black ratio of 50/25/25, is finally ball milled for 30 minutes. Coatings with a thickness between 20 and $30\mu m$ are deposited on a copper foil by doctor blade coating. The electrodes are subsequently cured in a vacuum oven at 150°C for three hours. Finally coin cell type batteries are prepared in a glove box using Li-foil as counter electrode.

Battery tests are performed on the electrodes under following conditions: between 0.01 and 1.0V at C/20 in which C is defined as a capacity of 3572mAh/g. This results in a capacity of 3370 mAh/g silicon powder at the 5th charge. (see Table 1) This value is an average of 3 coin cells.

Examples 2, 3 and counter examples 4 and 5

Different water based suspensions are prepared in which the pH is adapted in a controlled way between 3.0 and 5.0 by adding formic acid (HCOOH) (Merck Index, ≥ 90%). In each suspension nano silicon powder, with a specific surface area of $20m^2/g$ and oxygen content of 3wt%, is added. Four different suspensions are prepared with pH equal to 3, 3.5, 4.5 and 5. These suspension are ball milled during 15 minutes using the Fritch Pulverisette. Oxygen levels of the silicon powders varies from 8wt% at pH5 up to 18wt% at pH3.

Pastes are prepared at these different pH by adding Na-CMC and acetylene black to the suspension of silicon prepared as described in Example 1. The final paste, having a silicon/CMC/acetylene black ratio of 50/25/25, is ball milled for 30 minutes. Coatings with a thickness between 20 and $30\mu m$ are deposited on a copper foil by doctor blade coating. The electrodes are subsequently dried in a vacuum oven at 150°C for three hours. Finally coin cell type batteries are prepared in a glove box using Li-foil as counter electrode.

Battery tests are performed under similar conditions as explained in Example 1. Table 1 gives an overview of the resulting capacity at the 5th charge. These values are an average of 3 coin cells. It is shown that high capacity values between 3120 mAh/g and 3550 mAh/g are obtained between pH3 and pH5.

Example 6

A water based suspension is prepared by adding acetylene black to an aged water based Na-CMC solution having a pH of 8. This suspension is ball milled during 15 minutes using the Fritch Pulverisette 6. In this way the oxygen level is measured and equals 3wt%.

Subsequently, a paste is prepared by adding silicon powder to the acetylene black:Na-CMC suspension. The final paste, having a silicon/CMC/acetylene black ratio of 50/25/25, is finally ball milled for 30 minutes. Coatings with a thickness between 20 and $30\mu m$ are deposited on a copper foil by doctor blade coating. The electrodes are subsequently dried in a vacuum oven at 150°C for three hours. Finally coin cell type batteries are prepared in a glove box using Li-foil as counter electrode.

Battery tests are performed on the electrodes under following conditions: between 0.01 and 1.0V at C/20 in which C is defined as a capacity of 3572mAh/g. This resulted in a capacity at the 5th charge that is clearly higher than the value obtained in Example 1.

Counter example 7

A silicon suspension is prepared at pH 2.5, leading to an oxygen level of 23 wt%. A paste and coin cells are prepared and battery tests are performed in a similar way as described in Example 1. The resulting capacity at the 5th charge equals 2600 mAh/g. The capacity level is much lower than for lower oxygen contents and this low capacity is unacceptable.

Counter example 8

A water based suspension is prepared by adding silicon powder and acetylene black in one step in a water based Na-CMC solution at pH8. The final paste, having a silicon/CMC/acetylene black ratio of 50/25/25, is finally ball

milled for 30 minutes. Coatings with a thickness between 20 and 30$\mu$m are deposited on a copper foil by doctor blade coating. The electrodes are subsequently dried in a vacuum oven at 150°C for three hours. Finally coin cell type batteries are prepared in a glove box using Li-foil as counter electrode.

Battery tests are performed on the electrodes under following conditions: between 0.01 and 1.0V at C/20 in which C is defined as a capacity of 3572mAh/g. This resulted in a low capacity at the 5th charge that is lower than 85% of the capacity obtained in Example 1.

Table 1: Capacity of coin cells vs. oxygen content of the silicon in the electrode composition.

| Example | Oxygen content (wt%) | Capacity 5th charge (mAh/g silicon) |
|---|---|---|
| 1 | 3 | 3370 |
| 2 | 8 | 3550 |
| 3 | 10 | 3360 |
| 4 | 15 | 3300 |
| 5 | 18 | 3120 |
| 6 | 3 | 3572 |
| 7 | 23 | 2600 |
| 8 | - | < 2600 |

The exemplification set out herein illustrates preferred embodiments of the invention, in one form, and such exemplification is not to be construed as limiting the scope of the invention in any manner.

**Claims**

1. An electrode assembly for a rechargeable Li-ion battery, comprising a current collector provided with an electrode composition comprising nano silicon powder and carboxymethyl cellulose (CMC) binder material, wherein said nano silicon powder is provided with a $SiO_x$ layer, with $1 \leq x < 2$, such that the oxygen content of said nano silicon powder is between 3 and 10 % by weight.

2. The electrode assembly of claim 1, wherein said electrode composition has a capacity of more than 3300 mAh/g silicon when cycled between 0.01 and 1.0 V.

3. The electrode assembly of claim 2 wherein said capacity is achieved at the 5th charge.

4. The electrode assembly of any one of claims 1 to 3, wherein said electrode composition has a capacity of more than 660 mAh/g electrode.

5. The electrode assembly according to any one of claims 1 to 4, wherein said nano silicon powder has an average particle size of at least 0.01 $\mu$m.

6. The electrode assembly according to any one of claims 1 to 5, wherein said electrode composition further comprises styrene butadiene rubber as binder material.

7. The electrode assembly according to any one of claims 1 to 6, wherein said electrode composition consists of 20-80 wt% nano silicon, 5-40 wt% binder material, the remainder being a compound consisting of carbon.

8. The electrode assembly according to claim 7, wherein said electrode composition consists of 20-60 wt% nano silicon, 20-40 wt% binder material, and at least 3 wt% of a compound consisting of carbon.

9. The electrode assembly according to claims 7 or 8, wherein said carbon compound consists of acetylene black powder.

10. The electrode assembly according to claim 9, wherein said electrode composition consists of 50 wt% silicon, 25 wt% binder material, and 25 wt% acetylene black powder.

11. A process for preparing an electrode assembly for a rechargeable Li-ion battery according to any one claims 7 to 10, comprising the steps of:

- dissolving a CMC salt in water so as to obtain an aqueous solution of binder material,
- dispersing said carbon compound in said aqueous solution, and thereafter
- dispersing said nano silicon powder in said aqueous solution, thereby obtaining a slurry,
- spreading said slurry on a current collector, such as a copper foil, and
- curing said electrode assembly comprising said slurry at a temperature between 125 and 175°C.

12. A process for preparing an electrode assembly for a rechargeable Li-ion battery according to any one claims 7 to 10, comprising the steps of:

- dissolving a CMC salt in water so as to obtain an aqueous solution of binder material,
- dispersing said nano silicon powder in said aqueous solution, and thereafter
- dispersing said carbon compound in said aqueous solution, thereby obtaining a slurry,
- spreading said slurry on a current collector, such as a copper foil, and
- curing said electrode assembly comprising said slurry at a temperature between 125 and 175°C.

13. A process for preparing an electrode assembly for a rechargeable Li-ion battery according to any one claims 7 to 10, comprising the steps of:

- dissolving a CMC salt in water so as to obtain an aqueous solution of binder material,
- dispersing said nano silicon powder in an aqueous solution having a pH between 3 and 8, so as to obtain a silicon suspension,
- mixing said aqueous binder solution and said silicon suspension so as to obtain an aqueous CMC-silicon suspension,
- dispersing said carbon compound in said CMC-silicon suspension, thereby obtaining a slurry,
- spreading said slurry on a current collector, such as a copper foil, and
- curing said electrode assembly comprising said slurry at a temperature between 125 and 175°C.

14. The process for preparing an electrode assembly according to claims 11 or 12 , wherein said aqueous solution of binder material is aged under stirring for at least 5 hours, before dispersing either said nano silicon powder or said carbon compound in said aqueous binder solution.

15. The process for preparing an electrode assembly according to claim 14, wherein after said aging, the pH of said aqueous solution of binder material is adjusted to a value between 3 and 8 before dispersing either said nano silicon powder or said carbon compound in said aqueous binder solution.

16. The process for preparing an electrode assembly according to claim 15, wherein said adjusting of the pH is obtained by the addition of formic acid.

17. The process for preparing an electrode assembly according to any one of claims 11 to 16, wherein said CMC salt is Na-CMC, and wherein said aqueous solution of binder material has a concentration of 2-10 wt% of Na-CMC.

**Patentansprüche**

1. Elektrodenanordnung für eine wiederaufladbare Li-Ionen-Batterie, umfassend einen Stromkollektor, der mit einer Elektrodenzusammensetzung versehen ist, die Nanosiliciumpulver und Carboxymethylcellulose(CMC)-Bindemittel umfasst, wobei das Nanosiliciumpulver so mit einer $SiO_x$-Schicht mit $1 \leq x < 2$ versehen ist, dass der Sauerstoffgehalt des Nanosiliciumpulvers zwischen 3 und 10 Gew.-% liegt.

2. Elektrodenanordnung nach Anspruch 1, wobei die Elektrodenzusammensetzung bei Zyklisierung zwischen 0,01 und 1,0 V eine Kapazität von mehr als 3300 mAh/g Silicium aufweist.

3. Elektrodenanordnung nach Anspruch 2, wobei die Kapazität nach der 5. Aufladung erreicht wird.

4. Elektrodenanordnung nach einem der Ansprüche 1 bis 3, wobei die Elektrodenzusammensetzung eine Kapazität von mehr als 660 mAh/g Elektrode aufweist.

5. Elektrodenanordnung nach einem der Ansprüche 1 bis 4, wobei das Nanosiliciumpulver eine mittlere Teilchengröße von mindestens 0,01 μm aufweist.

6. Elektrodenanordnung nach einem der Ansprüche 1 bis 5, wobei die Elektrodenzusammensetzung ferner Styrol-Butadien-Kautschuk als Bindemittel umfasst.

7. Elektrodenanordnung nach einem der Ansprüche 1 bis 6, wobei die Elektrodenzusammensetzung aus 20-80 Gew.-% Nanosilicium, 5-40 Gew.-% Bindemittel, wobei es sich bei dem Rest um eine aus Kohlenstoff bestehende Verbindung handelt, besteht.

8. Elektrodenanordnung nach Anspruch 7, wobei die Elektrodenzusammensetzung aus 20-60 Gew.-% Nanosilicium, 20-40 Gew.-% Bindemittel und mindestens 3 Gew.-% einer aus Kohlenstoff bestehenden Verbindung besteht.

9. Elektrodenanordnung nach Anspruch 7 oder 8, wobei die Kohlenstoffverbindung aus Acetylenrußpulver besteht.

10. Elektrodenanordnung nach Anspruch 9, wobei die Elektrodenzusammensetzung aus 50 Gew.-% Silicium, 25 Gew.-% Bindemittel und 25 Gew.-% Acetylenrußpulver besteht.

11. Verfahren zur Herstellung einer Elektrodenanordnung für eine wiederaufladbare Li-Ionen-Batterie nach einem der Ansprüche 7 bis 10, bei dem man:

    - ein CMC-Salz in Wasser löst, wobei man eine wässrige Bindemittellösung erhält,
    - die Kohlenstoffverbindung in der wässrigen Lösung dispergiert und danach
    - das Nanosiliciumpulver in der wässrigen Lösung dispergiert, wodurch man eine Aufschlämmung erhält,
    - die Aufschlämmung auf einem Stromkollektor, wie eine Kupferfolie, verteilt und
    - die Elektrodenanordnung mit der Aufschlämmung bei einer Temperatur zwischen 125 und 175°C härtet.

12. Verfahren zur Herstellung einer Elektrodenanordnung für eine wiederaufladbare Li-Ionen-Batterie nach einem der Ansprüche 7 bis 10, bei dem man:

    - ein CMC-Salz in Wasser löst, wobei man eine wässrige Bindemittellösung erhält,
    - das Nanosiliciumpulver in der wässrigen Lösung dispergiert und danach
    - die Kohlenstoffverbindung in der wässrigen Lösung dispergiert, wodurch man eine Aufschlämmung erhält,
    - die Aufschlämmung auf einem Stromkollektor, wie eine Kupferfolie, verteilt und
    - die Elektrodenanordnung mit der Aufschlämmung bei einer Temperatur zwischen 125 und 175°C härtet.

13. Verfahren zur Herstellung einer Elektrodenanordnung für eine wiederaufladbare Li-Ionen-Batterie nach einem der Ansprüche 7 bis 10, bei dem man:

    - ein CMC-Salz in Wasser löst, wobei man eine wässrige Bindemittellösung erhält,
    - das Nanosiliciumpulver in einer wässrigen Lösung mit einem pH-Wert zwischen 3 und 8 dispergiert, wobei man eine Siliciumsuspension erhält,
    - die wässrige Bindemittellösung und die Siliciumsuspension mischt, wobei man eine wässrige CMC-Siliciumsuspension erhält,
    - die Kohlenstoffverbindung in der wässrigen CMC-Siliciumsuspension dispergiert, wodurch man eine Aufschlämmung erhält,
    - die Aufschlämmung auf einem Stromkollektor, wie eine Kupferfolie, verteilt und
    - die Elektrodenanordnung mit der Aufschlämmung bei einer Temperatur zwischen 125 und 175°C härtet.

14. Verfahren zur Herstellung einer Elektrodenanordnung nach Anspruch 11 oder 12, bei dem man die wässrige Bindemittellösung unter Rühren mindestens 5 Stunden altert, bevor man das Nanosiliciumpulver bzw. die Kohlenstoffverbindung in der wässrigen Bindemittellösung dispergiert.

15. Verfahren zur Herstellung einer Elektrodenanordnung nach Anspruch 14, bei dem man nach der Alterung den pH-Wert der wässrigen Bindemittellösung auf einen Wert zwischen 3 und 8 einstellt, bevor man das Nanosiliciumpulver bzw. die Kohlenstoffverbindung in der wässrigen Bindemittellösung dispergiert.

16. Verfahren zur Herstellung einer Elektrodenanordnung nach Anspruch 15, bei dem man die Einstellung des pH-Wert durch Zugabe von Ameisensäure erhält.

17. Verfahren zur Herstellung einer Elektrodenanordnung nach einem der Ansprüche 11 bis 16, bei dem es sich bei dem CMC-Salz um Na-CMC handelt und wobei die wässrige Bindemittellösung einer Konzentration von 2-10 Gew.-% Na-CMC aufweist.

**Revendications**

1. Ensemble électrode pour une batterie Li-ion rechargeable, comprenant un collecteur de courant pourvu d'une composition d'électrode comprenant une nanopoudre de silicium et un matériau liant à base de carboxyméthyl-cellulose (CMC), ladite nanopoudre de silicium étant pourvue d'une couche de $SiO_x$, avec $1 \leq x < 2$, de telle sorte que la teneur en oxygène de ladite nanopoudre de silicium se situe entre 3 et 10 % en poids.

2. Ensemble électrode selon la revendication 1, dans lequel ladite composition d'électrode a une capacité supérieure à 3300 mAh/g de silicium lorsqu'elle est cyclée entre 0,01 et 1,0 V.

3. Ensemble électrode selon la revendication 2, dans lequel ladite capacité est atteinte à la 5e charge.

4. Ensemble électrode selon l'une quelconque des revendications 1 à 3, dans lequel ladite composition d'électrode a une capacité supérieure à 660 mAh/g d'électrode.

5. Ensemble électrode selon l'une quelconque des revendications 1 à 4, dans lequel ladite nanopoudre de silicium a une taille moyenne de particules d'au moins 0,01 $\mu$m.

6. Ensemble électrode selon l'une quelconque des revendications 1 à 5, dans lequel ladite composition d'électrode comprend en outre du caoutchouc styrène-butadiène comme matériau liant.

7. Ensemble électrode selon l'une quelconque des revendications 1 à 6, dans lequel ladite composition d'électrode est constituée de 20-80 % en poids de nanosilicium, 5-40 % en poids de matériau liant, le reste étant un composé constitué de carbone.

8. Ensemble électrode selon la revendication 7, dans lequel ladite composition d'électrode est constituée de 20-60 % en poids de nanosilicium, 20-40 % en poids de matériau liant, et au moins 3 % en poids d'un composé constitué de carbone.

9. Ensemble électrode selon la revendication 7 ou 8, dans lequel ledit composé de carbone consiste en une poudre de noir d'acétylène.

10. Ensemble électrode selon la revendication 9, dans lequel ladite composition d'électrode est constituée de 50 % en poids de silicium, 25 % en poids de matériau liant, et 25 % en poids de poudre de noir d'acétylène.

11. Procédé de préparation d'un ensemble électrode pour une batterie Li-ion rechargeable selon l'une quelconque des revendications 7 à 10, comprenant les étapes consistant à :

   - dissoudre un sel de CMC dans de l'eau de manière à obtenir une solution aqueuse de matériau liant,
   - disperser ledit composé de carbone dans ladite solution aqueuse, et par la suite
   - disperser ladite nanopoudre de silicium dans ladite solution aqueuse pour obtenir ainsi une bouillie,
   - étaler ladite bouillie sur un collecteur de courant, tel qu'une feuille de cuivre, et
   - durcir ledit ensemble électrode comprenant ladite bouillie à une température comprise entre 125 et 175 °C.

12. Procédé de préparation d'un ensemble électrode pour une batterie Li-ion rechargeable selon l'une quelconque des revendications 7 à 10, comprenant les étapes consistant à :

   - dissoudre un sel de CMC dans de l'eau de manière à obtenir une solution aqueuse de matériau liant,

- disperser ladite nanopoudre de silicium dans ladite solution aqueuse, et par la suite
- disperser ledit composé de carbone dans ladite solution aqueuse, pour obtenir ainsi une bouillie,
- étaler ladite bouillie sur un collecteur de courant, tel qu'une feuille de cuivre, et
- durcir ledit ensemble électrode comprenant ladite bouillie à une température comprise entre 125 et 175°C.

13. Procédé de préparation d'un ensemble électrode pour une batterie Li-ion rechargeable selon l'une quelconque des revendications 7 à 10, comprenant les étapes consistant à :

- dissoudre un sel de CMC dans de l'eau de manière à obtenir une solution aqueuse de matériau liant,
- disperser ladite nanopoudre de silicium dans une solution aqueuse ayant un pH compris entre 3 et 8, de manière à obtenir une suspension de silicium,
- mélanger ladite solution aqueuse de liant et ladite suspension de silicium de manière à obtenir une suspension aqueuse de CMC-silicium,
- disperser ledit composé de carbone dans ladite suspension de CMC-silicium, pour obtenir ainsi une bouillie,
- étaler ladite bouillie sur un collecteur de courant, tel qu'une feuille de cuivre, et
- durcir ledit ensemble électrode comprenant ladite bouillie à une température comprise entre 125 et 175 °C.

14. Procédé de préparation d'un ensemble électrode selon la revendication 11 ou 12, dans lequel ladite solution aqueuse de matériau liant est vieillie sous agitation pendant au moins 5 heures, avant de disperser ladite nanopoudre de silicium ou ledit composé de carbone dans ladite solution aqueuse de liant.

15. Procédé de préparation d'un ensemble électrode selon la revendication 14 dans lequel, après ledit vieillissement, le pH de ladite solution aqueuse de matériau liant est ajusté à une valeur comprise entre 3 et 8 avant de disperser ladite nanopoudre de silicium ou ledit composé de carbone dans ladite solution aqueuse de liant.

16. Procédé de préparation d'un ensemble électrode selon la revendication 15, dans lequel ledit ajustement du pH est obtenu par l'addition d'acide formique.

17. Procédé de préparation d'un ensemble électrode selon l'une quelconque des revendications 11 à 16, dans lequel ledit sel de CMC est la Na-CMC, et dans lequel ladite solution aqueuse de matériau liant a une concentration de 2-10 % en poids de Na-CMC.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2006237697 A

**Non-patent literature cited in the description**

• **Z. CHEN ; L. CHRISTENSEN ; J.R. DAHN.** *Journal of Electrochemical Society,* 2003, vol. 150, 1073

• **J. LI ; R.B. LEWIS ; J.R. DAHN.** *Electrochemical Solid State Letters,* 2007, vol. 10, 17
• **MAZOUZI et al.** Electrochemical and solid-state letters. IEEE Service Center, vol. 12